# FASCICULE DE BREVET EUROPEEN

(11) **EP 3 638 519 B1**
(45) Date de publication et mention de la délivrance du brevet: **05.05.2021**
(21) Numéro de dépôt: 18728420.3
(22) Date de dépôt: 08.06.2018
(51) Int. Cl.: B60D 1/48, B60D 1/155

(54) **TIMON D'ATTELAGE A SECURITE ET VERROUILLAGE EN POSITION**
DEICHSEL MIT SICHERHEITSMECHANISMUS UND VERRIEGELUNG IN POSITION
DRAWBAR WITH SAFETY MECHANISM AND LATCHING IN POSITION

(30) Priorité: 16.06.2017 FR 1755524
(43) Date de publication de la demande: 22.04.2020
(73) Titulaire: Lohr Industrie, 67980 Hangenbieten (FR)
(72) Inventeur: SCHEER, Daniel, 67190 Still (FR); GANTER, Didier, 67640 Fegersheim (FR); ANDRE, Jean-Luc, 67120 Molsheim (FR); SUTTER, Nicolas, 67100 Strasbourg (FR)
(74) Mandataire: Merckling, Norbert
(86) Numéro de dépôt international: PCT/EP2018/065187
(87) Numéro de publication internationale: WO 2018/228943

(56) Documents cités:
- EP-A1- 1 974 963
- WO-A1-2017/089733
- US-A- 2 693 368

## Description

### Domaine technique

La présente invention se rapporte à un timon d'attelage comportant un vérin et prévu pour être monté sur un véhicule routier afin de permettre son attelage avec un autre véhicule routier.

L'invention concerne plus particulièrement un timon d'attelage étant mobile par rapport au véhicule qu'il équipe au moins selon un débattement latéral dans le plan horizontal ou selon un débattement vertical dans le plan vertical.

### Etat de la technique

Le timon d'attelage de l'invention est spécifique en ce qu'il comporte un vérin longitudinal à tige mobile dont l'extrémité distale comporte une pièce d'attelage, par exemple un anneau, une boule ou un crochet d'attelage, prévue pour être verrouillée avec une pièce d'attelage complémentaire d'un autre véhicule en vue d'atteler lesdits deux véhicules.

En cas de défaillance du vérin du timon d'attelage, sa tige mobile est alors flottante, ce qui n'est pas sécuritaire pour l'attelage des deux véhicules.

Le timon d'attelage de l'invention est également spécifique en ce qu'il est mobile par rapport au véhicule qu'il équipe selon au moins un débattement latéral ou vertical. Lorsque l'extrémité distale du timon d'attelage est verrouillée avec un autre véhicule, les deux véhicules sont attelés et les moyens de débattement latéral et/ou vertical du timon d'attelage autorisent certains degrés de mouvement d'un véhicule par rapport à l'autre, par exemple un mouvement de lacet et/ou de tangage comme cela est connu pour les dispositifs d'attelage.

Lorsque l'extrémité distale du timon d'attelage n'est pas verrouillée avec un autre véhicule, le timon d'attelage est libre de ses mouvements par rapport au véhicule qu'il équipe. Bien que l'amplitude de ces mouvements soit préférentiellement limitée par des butées, le balancement latéral et/ou vertical du timon d'attelage lorsque le véhicule circule provoque des secousses désagréables et les chocs occasionnés sont susceptibles de détériorer le timon d'attelage et le véhicule qu'il équipe. En outre, en cas de circulation du véhicule sur un de nid-de-poule ou sur un dos d'âne, le timon d'attelage est susceptible de heurter le sol, ce qui peut gravement endommager le timon d'attelage et le véhicule qu'il équipe. Enfin, les mouvements libres du timon d'attelage ne sont pas sécuritaires et ne permettent pas de savoir à chaque instant dans quelle position se trouve le timon d'attelage.

Ces problèmes deviennent encore plus critiques dans le cas où le timon d'attelage présente une grande longueur. En effet, le timon d'attelage de l'invention est spécifique en ce qu'il s'étend préférentiellement sensiblement depuis l'essieu avant du véhicule, jusqu'à l'avant du dit véhicule, de sorte que l'anneau d'attelage qui équipe par exemple l'extrémité distale du timon d'attelage soit en saillie à l'avant du véhicule.

Par le document EP 1974963 on connaît un dispositif de remorquage pour véhicule agricole ou industriel qui comporte un châssis inférieur présentant une partie extensible équipée d'une boule d'attelage. Un ergot immobilise longitudinalement la partie extensible en s'engageant dans un logement du châssis fixe. Cependant, cet ergot n'est pas actionné automatiquement en verrouillage en cas de défaillance de l'actionneur qui déplace longitudinalement la partie extensible du châssis.

Par le document US 2693368 on connaît également une barre de remorquage télescopique de longueur réglable afin de pouvoir l'adapter à la distance entre le véhicule tracteur et le véhicule tracté. Le déplacement longitudinal des deux parties télescopiques de la barre de remorquage peut être verrouillé par un dispositif à effet de cliquet qui peut être déverrouillé manuellement. Ce document D2 ne divulgue cependant aucun vérin et le fonctionnement de la barre de remorquage télescopique est entièrement manuel Le document EP 1 974 963 A1 divulgue un véhicule selon le préambule de la revendication 1.

En conséquence il existe un besoin pour un timon d'attelage permettant de répondre aux problèmes évoqués précédemment.

### Description de l'invention

Dans le domaine des timons d'attelage équipés d'un vérin à tige mobile dont l'extrémité libre est équipée d'une pièce d'attelage, l'objet de la présente invention vise par conséquent à pallier les inconvénients de l'art antérieur en proposant un nouveau timon d'attelage comprenant un dispositif de sécurité qui empêche la sortie de la tige mobile du vérin en cas de défaillance de celui-ci.

Un tel vérin, peut par exemple être un vérin pneumatique, hydraulique ou électrique.

Avantageusement, le dispositif de sécurité doit être automatique, doit fonctionner sans énergie, ne doit pas empêcher la rentrée de la tige mobile du vérin, et doit autoriser la sortie de la tige mobile du vérin lorsque ledit vérin est actionné en sortie par sa mise sous pression ou son alimentation électrique.

Un autre objet de la présente invention vise également à proposer un nouveau timon d'attelage comprenant un dispositif permettant de l'immobiliser en position lorsqu'il n'est pas attelé à un autre véhicule.

Un autre objet de la présente invention vise aussi à proposer un nouveau timon d'attelage équipé d'un dispositif d'immobilisation permettant de relever l'extrémité libre du timon d'attelage lorsqu'il est immobilisé, afin d'éviter que celui-ci ne touche le sol lors du franchissement d'un nid-de-poule ou d'un dos d'âne.

Avantageusement, ce dispositif d'immobilisation est motorisé par le vérin du timon d'attelage.

Les objets assignés à l'invention sont atteints à l'aide d'un véhicule routier équipé d'un timon d'attelage pour son attelage avec un second véhicule routier, caractérisé en ce que le timon d'attelage comprend les moyens suivants :
- un vérin principal disposé longitudinalement dans le timon d'attelage et comportant une tige mobile entre une position rétractée, une position sortie et une position intermédiaire comprise entre la position rétractée et la position sortie ;
- une pièce d'attelage prévue à l'extrémité libre de la tige mobile du vérin principal, ladite pièce d'attelage étant apte à atteler ledit véhicule au second véhicule routier par son verrouillage avec une pièce d'attelage complémentaire ;
- un dispositif de verrouillage qui est actionné automatiquement en verrouillage en cas de défaillance dudit vérin principal, le dispositif de verrouillage empêchant la sortie de la tige mobile du vérin principal lorsqu'il est actionné en verrouillage.

Ainsi, grâce à l'invention, l'attelage est sécurisé, même en cas de défaillance du vérin principal. En outre, le dispositif de verrouillage selon l'invention ne s'active que lorsque le vérin principal est défaillant, ce qui permet de régler la distance entre les véhicules attelés de façon continue en fonctionnement nominal, et non pas seulement selon des valeurs de course discrète.

Selon un exemple de mise en œuvre de l'invention, le dispositif de verrouillage comprend un ensemble de verrouillage solidaire du timon d'attelage et prévu pour s'engager à verrouillage mutuel avec un ensemble de verrouillage complémentaire solidaire de la tige mobile du vérin principal lorsque la tige mobile est en position intermédiaire afin d'empêcher le déplacement de ladite tige mobile du vérin principal en position sortie.

Selon un autre exemple de mise en œuvre de l'invention, l'ensemble de verrouillage comprend un cliquet de sécurité monté mobile sur le timon d'attelage entre une position de verrouillage empêchant le déplacement de la tige mobile du vérin principal lorsque ladite tige mobile est en position intermédiaire et une position escamotée dans laquelle il est passif et autorise le déplacement la tige mobile.

L'avantage d'un cliquet est qu'il autorise le déplacement de la tige mobile en rentrée, mais qu'il la bloque en sortie lorsqu'elle est en position intermédiaire.

Selon un exemple supplémentaire de mise en œuvre de l'invention, l'ensemble de verrouillage comprend un mécanisme de maintien qui contraint le cliquet de sécurité en position de verrouillage lorsque la tige mobile du vérin principal est immobile ou se déplace en direction de la position sortie, et qui autorise le déplacement automatique du cliquet de sécurité en position escamotée lorsque la tige mobile du vérin principal se déplace en direction de la position rétractée.

Selon un exemple de mise en œuvre de l'invention, le mécanisme de maintien comporte un dispositif de rappel ou de poussée élastique qui contraint le cliquet de sécurité en position de verrouillage.

Selon un autre exemple de mise en œuvre de l'invention, le mécanisme de maintien comporte un vérin secondaire qui déplace le cliquet de sécurité en position escamotée lorsqu'il est actionné, une chambre dudit vérin secondaire étant en communication fluidique avec une chambre du vérin principal ou la commande électrique du vérin secondaire étant asservie à celle du vérin principal de sorte que lorsque le vérin principal est actionné pour faire sortir la tige mobile, le vérin secondaire associé au cliquet de sécurité est aussi actionné.

L'asservissement du vérin secondaire du cliquet de sécurité au vérin principal permet de déverrouiller automatiquement la tige du vérin lorsque l'utilisateur souhaite la déplacer en position sortie.

Selon un exemple supplémentaire de mise en œuvre de l'invention, le cliquet de sécurité comporte un doigt de verrouillage, et l'ensemble de verrouillage complémentaire solidaire de la tige mobile du vérin principal comprend un orifice récepteur prévu pour recevoir le doigt de verrouillage en position de verrouillage.

Selon un exemple de mise en œuvre de l'invention, le timon d'attelage est monté pivotant par rapport au véhicule routier qu'il équipe dans un plan horizontal et/ou dans un plan vertical, et il comprend en outre un dispositif d'immobilisation prévu pour empêcher tout pivotement du timon d'attelage lorsque la tige mobile dudit timon d'attelage est en position rétractée.

Ainsi, grâce à l'invention, le timon d'attelage est immobilisé lorsqu'il n'est pas utilisé.

Selon un autre exemple de mise en œuvre de l'invention, le dispositif d'immobilisation comprend :
- un premier élément d'immobilisation fixé au véhicule routier ;
- un second élément d'immobilisation fixé au timon d'attelage et prévu pour s'engager à verrouillage mutuel avec ledit premier élément d'immobilisation
lorsque la tige mobile du vérin principal est déplacée en position rétractée ; ledit timon d'attelage étant immobilisé en position lorsque les premier et second éléments d'immobilisation sont verrouillés mutuellement.

Selon un autre de mise en œuvre de l'invention, le second élément d'immobilisation est monté pivotant sur le timon d'attelage entre une position de verrouillage dans laquelle il est engagé à verrouillage avec le premier élément d'immobilisation, et une position de déverrouillage dans laquelle il n'est pas engagé à verrouillage avec le premier élément d'immobilisation, et le dispositif d'immobilisation comprend :
- une came reliée à la tige mobile du vérin principal et au second élément d'immobilisation ; ou
- une pièce en saillie prévue sur la tige mobile du vérin principal et venant en contact avec le second élément d'immobilisation lorsque ladite tige mobile est déplacée en position rétractée ;
ladite came ou pièce en saillie faisant pivoter le second élément d'immobilisation en position de verrouillage lorsque la tige mobile du vérin est déplacée en position rétractée.

Ainsi, le timon d'attelage est immobilisé automatiquement lors du déplacement en position rentrée de la tige mobile du vérin principal

Selon un exemple supplémentaire de mise en œuvre de l'invention, le premier élément d'immobilisation est prévu sous le véhicule routier et le second élément d'immobilisation est prévu en partie supérieure du timon d'attelage.

Selon un exemple de mise en œuvre de l'invention, les premier et second éléments d'immobilisation sont pour l'un une griffe ou un crochet et pour l'autre un verrou ou un étrier, lesdits premier et second éléments d'immobilisation étant prévus pour être engagés à verrouillage mutuel lorsque la tige mobile dudit timon d'attelage est en position rétractée.

Selon un autre exemple de mise en œuvre de l'invention, le dispositif d'immobilisation comprend un dispositif de poussée ou de rappel élastique qui contraint le second élément d'immobilisation en position de déverrouillage.

Les objets assignés à l'invention sont atteints également à l'aide d'un véhicule routier tel que décrit précédemment, caractérisé en ce qu'il comporte :
- un timon d'attelage à une extrémité avant ou arrière du véhicule routier, et comportant une pièce d'attelage ;
- une chape d'attelage prévue l'extrémité opposée du véhicule routier, et comportant une pièce d'attelage complémentaire ;
la pièce d'attelage du véhicule routier étant apte à se verrouiller mutuellement avec une pièce d'attelage complémentaire d'un autre véhicule routier, et ladite pièce d'attelage complémentaire du véhicule routier étant apte à se verrouiller mutuellement avec la pièce d'attelage d'un autre véhicule routier.

Selon un autre de mise en œuvre de l'invention, le véhicule routier comporte un timon d'attelage à l'avant et une chape d'attelage à l'arrière.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :

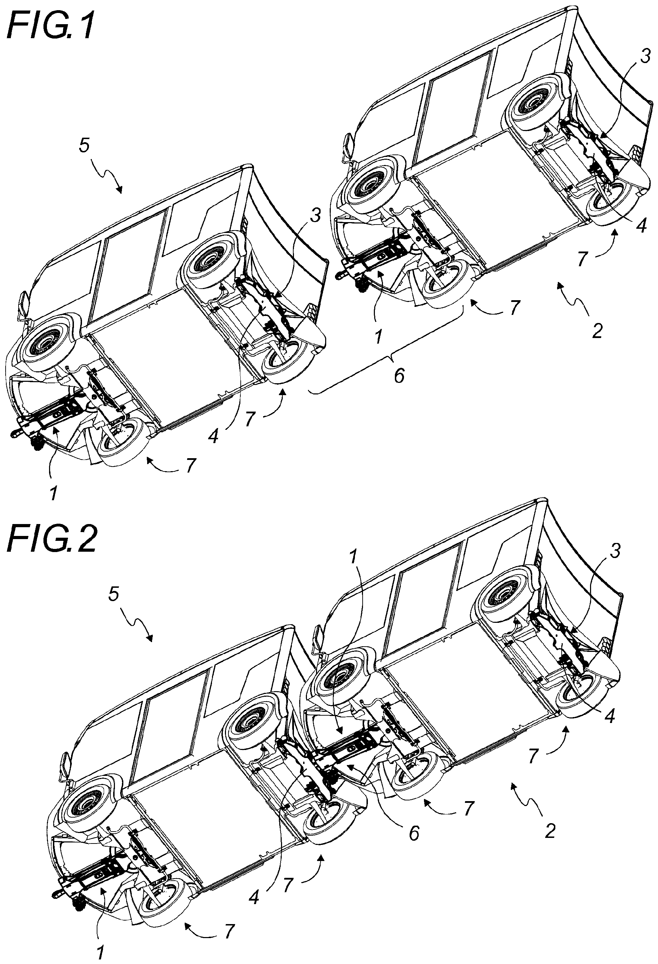

- la figure 1 est une vue en perspective de dessous de trois-quarts arrière de deux véhicules routiers équipés d'un dispositif d'attelage comportant un timon d'attelage selon l'invention, ces deux véhicules routiers n'étant pas attelés ;
- la figure 2 est une vue en perspective similaire à celle de la figure 1, dans laquelle les deux véhicules routiers sont attelés ;

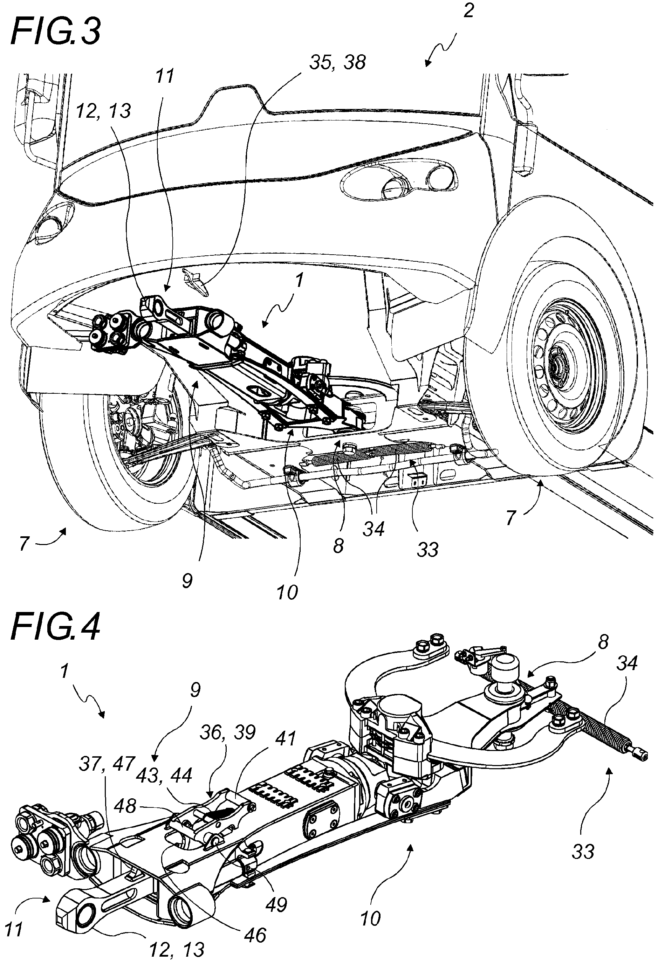

- la figure 3 est une vue en perspective de dessous de trois-quarts avant d'un véhicule routier équipé d'un timon d'attelage selon l'invention ;
- la figure 4 est une vue en perspective de dessus de trois-quarts avant d'un timon d'attelage selon l'invention ;
- les figures 5 et 6 sont des vues en coupe horizontale longitudinale d'un timon d'attelage selon l'invention, ces figures illustrant le fonctionnement du cliquet de sécurité de l'invention ;
- les figures 7 et 8 sont des vues de détails des parties encerclées respectivement sur les figures 5 et 6 ; et
- les figures 9 à 11 sont des vues en coupe verticale longitudinale d'un timon d'attelage selon l'invention, ces figures illustrant les étapes de verrouillage en position dudit timon.

### Mode(s) de réalisation de l'invention

Les éléments structurellement et fonctionnellement identiques présents sur plusieurs figures distinctes, sont affectés d'une même référence numérique ou alphanumérique.

Le timon d'attelage (1) selon l'invention est préférentiellement prévu pour être monté sous un premier véhicule routier (2) afin d'être par exemple reçu dans une chape d'attelage (3) solidaire de la traverse (4) d'un second véhicule routier (5) afin d'atteler ces deux véhicules routiers (2, 5).

Le timon d'attelage (1) selon l'invention et la chape d'attelage (3) font par conséquent partie d'un dispositif d'attelage (6) permettant d'atteler deux véhicules routiers (2, 5).

Les expressions "premier véhicule" et "second véhicule" ne traduisent aucun positionnement relatif, ni aucun rôle, pour ces véhicules, mais permet uniquement de les distinguer l'un de l'autre.

Selon un mode de réalisation préféré de l'invention, le second véhicule routier (5) est un véhicule motorisé tracteur qui est positionné devant le premier véhicule routier (2), qui est un véhicule suiveur.

Les véhicules routiers (2, 5) comportent préférentiellement chacun au moins deux essieux (7) et sont destinés au transport de personnes.

Selon un mode de réalisation préféré de l'invention, les premier et second véhicules routiers (2, 5) sont identiques, et prévus pour former des attelages d'au moins deux véhicules routiers (2, 5) à la suite les uns des autres afin de former un train routier. Ainsi, l'invention concerne également un véhicule routier (2) unitaire comportant un timon d'attelage (1) selon l'invention prévu à une extrémité avant ou arrière du véhicule routier (2), par exemple à l'avant dudit véhicule (2) et une chape d'attelage (3) prévue à l'extrémité opposée, par exemple à l'arrière dudit véhicule (2).

Le timon d'attelage (1) selon l'invention est préférentiellement monté à rotation par son extrémité proximale (8), sensiblement au niveau de l'essieu (7) avant du véhicule (2, 5) équipé dudit timon d'attelage (1), ce qui permet un débattement en lacet des véhicules routiers (2, 5) attelés l'un par rapport à l'autre.

Préférentiellement, le timon d'attelage (1) selon l'invention comporte également une articulation permettant à sa partie distale (9) de pivoter verticalement par rapport à sa partie proximale (10) et donc par rapport au véhicule (2, 5) équipé dudit timon d'attelage (1).

L'extrémité distale (11) du timon d'attelage (1) comporte une pièce d'attelage (12) apte à coopérer avec une pièce d'attelage complémentaire d'un autre véhicule (5) afin d'atteler les véhicules routiers (2, 5).

Par pièce d'attelage (12), on entend ici une pièce d'attelage mâle ou femelle prévue pour être verrouillée avec une pièce d'attelage femelle ou mâle complémentaire prévue sur le second véhicule routier (5). Plusieurs formes peuvent être envisagées pour la pièce d'attelage (12) sans s'écarter du cadre de l'invention. Par exemple, la pièce d'attelage (12) peut être sous la forme d'un anneau d'attelage (13), mais aussi sous celle d'un crochet, d'une plaque percée, d'une pièce présentant un évidement, d'une tige, d'une boule d'attelage, etc.

Sur les figures, le timon d'attelage (1) comporte une pièce d'attelage (12) sous la forme d'un anneau d'attelage (13) prévu au niveau de son extrémité distale (11), tandis que la chape d'attelage (3) du second véhicule routier (5) comporte un logement récepteur (8) dans lequel ledit anneau d'attelage (13) est prévu pour être reçu et verrouillé en vue de l'attelage des deux véhicules routiers (2, 5).

Le timon d'attelage (1) selon l'invention comprend un vérin principal (14) disposé longitudinalement dans le timon d'attelage et comportant une tige mobile (15).

La pièce d'attelage (12) est prévue à l'extrémité libre de la tige mobile (15) du vérin principal (14).

La tige mobile (15) du vérin principal (14) est apte à se déplacer entre une position rétractée, une position sortie et une position intermédiaire comprise entre la position rétractée et la position sortie. La position rétractée de la tige mobile (15) correspond également à une position rétractée de la pièce d'attelage (12), tandis que la position sortie de la tige mobile (15) correspond également à une position sortie de la pièce d'attelage (12). Lorsque le véhicule (2) équipé du timon d'attelage (1) selon l'invention n'est pas attelé, la tige mobile (15) du vérin principal (14) est déplacée en position rétractée.

Le vérin principal (14) sert notamment à faire sortir et rentrer la pièce d'attelage de manière à l'escamoter sous le véhicule (2) lorsqu'elle n'est pas nécessaire, par exemple lorsque le véhicule (2) circule en tant que véhicule unitaire, et à la déployer lorsque le véhicule (2) doit être attelé avec un second véhicule routier (5).

Une fois l'attelage effectué, le vérin principal (14) permet également de rapprocher les véhicules (2, 5) attelés.

Lorsque le véhicule routier (2) qu'il équipe est attelé à un autre second véhicule routier (5), le vérin principal (14) est mis sous pression ou alimenté en électricité de sorte que sa tige mobile (15) exerce une traction à l'encontre du second véhicule routier (5) et que la chape d'attelage (3) du second véhicule routier (5) soit plaquée fermement contre la face avant du timon d'attelage (1). Cette alimentation en énergie du vérin principal (14) permet ainsi de rigidifier le dispositif d'attelage (6).

Afin d'éviter tout risque de séparation des véhicules (2, 5) attelés en cas de défaillance du vérin principal (14), le timon d'attelage (1) selon l'invention comporte un dispositif de verrouillage (16) qui empêche la sortie de la tige mobile (15) du vérin principal (14) en cas de perte de pression dans ledit vérin principal (14), de défaillance de l'alimentation électrique du vérin principal (14) ou de défaillance du fonctionnement général du vérin principal (14).

Ce dispositif de verrouillage (16) est actionné automatiquement en verrouillage de la tige mobile (15) en cas de perte de défaillance du vérin principal (14).

Préférentiellement, le dispositif de verrouillage (16) n'est plus actionné en verrouillage de la tige mobile (15) lorsque le vérin principal (14) est mis sous pression ou alimenté en électricité en vue de la sortie de sa tige mobile (15).

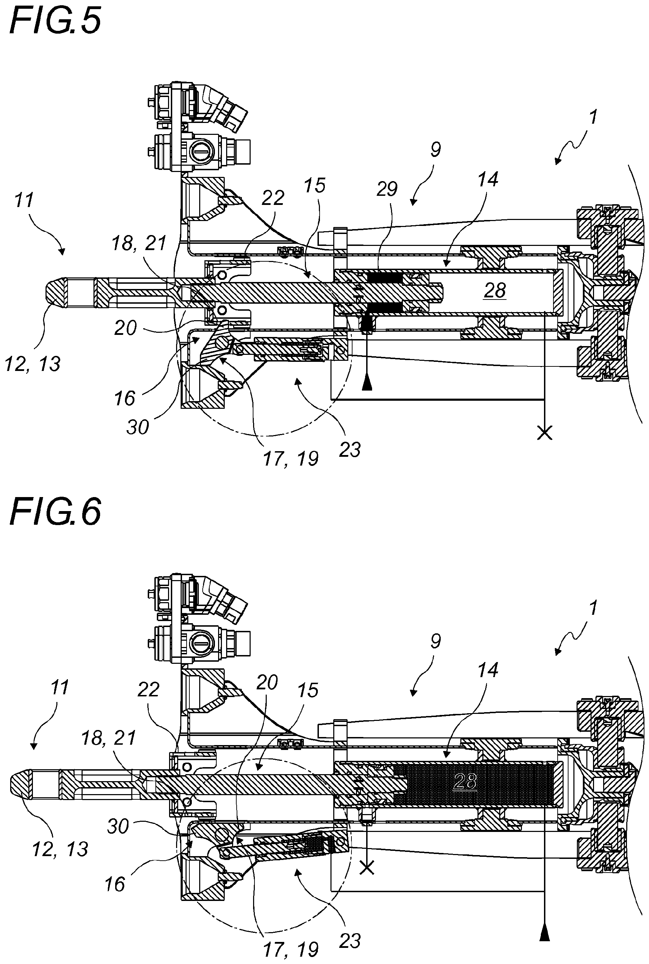

Tel que représenté sur les figures 5 à 8, le dispositif de verrouillage (16) comprend un ensemble de verrouillage (17) solidaire du timon d'attelage (1) et prévu pour s'engager à verrouillage mutuel avec un ensemble de verrouillage complémentaire (18) solidaire de la tige mobile (15) du vérin principal (14) lorsque la tige mobile (15) est en position intermédiaire afin d'empêcher le déplacement de ladite tige mobile (15) du vérin principal (14) en position sortie.

Selon un mode de réalisation préféré de l'invention, l'ensemble de verrouillage (17) comprend un cliquet de sécurité (19) monté mobile sur le timon d'attelage (1) entre une position de verrouillage empêchant le déplacement de la tige mobile (15) du vérin principal (14) lorsque ladite tige mobile (15) est en position intermédiaire et une position escamotée dans laquelle il est passif et autorise le déplacement de la tige mobile (15).

Sur les figures 5 à 8 données à titre d'exemple, le cliquet de sécurité (19) est prévu pivotant sur le timon d'attelage (1) dans un plan horizontal, avec un doigt de verrouillage (20) prévu pour être reçu dans un ensemble de verrouillage complémentaire (18) sous la forme d'un orifice récepteur (21) prévu dans une pièce de guidage (22) solidaire de la tige mobile (15) du vérin principal (14).

L'ensemble de verrouillage (17) comprend préférentiellement un mécanisme de maintien (23) qui contraint le cliquet de sécurité (19) en position de verrouillage lorsque la tige mobile (15) du vérin principal (14) est immobile ou se déplace en direction de la position sortie, et qui autorise le déplacement automatique du cliquet de sécurité (19) en position escamotée lorsque la tige mobile (15) du vérin principal (14) se déplace en direction de la position rétractée.

Selon l'exemple représenté sur les figures, le mécanisme de maintien (23) comporte un dispositif de rappel ou de poussée élastique (24) qui contraint le cliquet de sécurité (19) en position de verrouillage. Ce dispositif de rappel ou de poussée élastique (24) peut être sous la forme d'un ressort hélicoïdal (25).

Le mécanisme de maintien (23) comporte préférentiellement un vérin secondaire (26) qui déplace le cliquet de sécurité (19) en position escamotée lorsqu'il est actionné. Ce vérin secondaire (26) est préférentiellement un vérin à simple effet.

Dans le cas où le vérin secondaire (26) est un vérin pneumatique ou hydraulique, une chambre (27) dudit vérin secondaire (26) est préférentiellement en communication fluidique avec une chambre (28) du vérin principal (14) de sorte que lorsque le vérin principal (14) est actionné pour faire sortir la tige mobile (15), le vérin secondaire (26) associé au cliquet de sécurité (19) est aussi actionné.

De même, dans le cas où le vérin secondaire (26) est un vérin électrique, la commande électrique du vérin secondaire (26) est préférentiellement à celle du vérin principal (14) de sorte que lorsque le vérin principal (14) est actionné pour faire sortir la tige mobile (15), le vérin secondaire (26) associé au cliquet de sécurité (19) est aussi actionné pour le déplacer en position escamotée.

Sur les figures 5 à 8, est représenté un mode de réalisation préféré du dispositif de verrouillage (16) donné ici à titre d'exemple afin de mieux comprendre le fonctionnement dudit dispositif de l'invention. Dans cet exemple, le vérin principal (14) est un vérin à double effet. La mise sous pression de sa chambre proximale (28) provoquant la sortie de la tige mobile (15), tandis que la sous pression de sa chambre distale (29) provoquant la rentrée de la tige mobile (15).

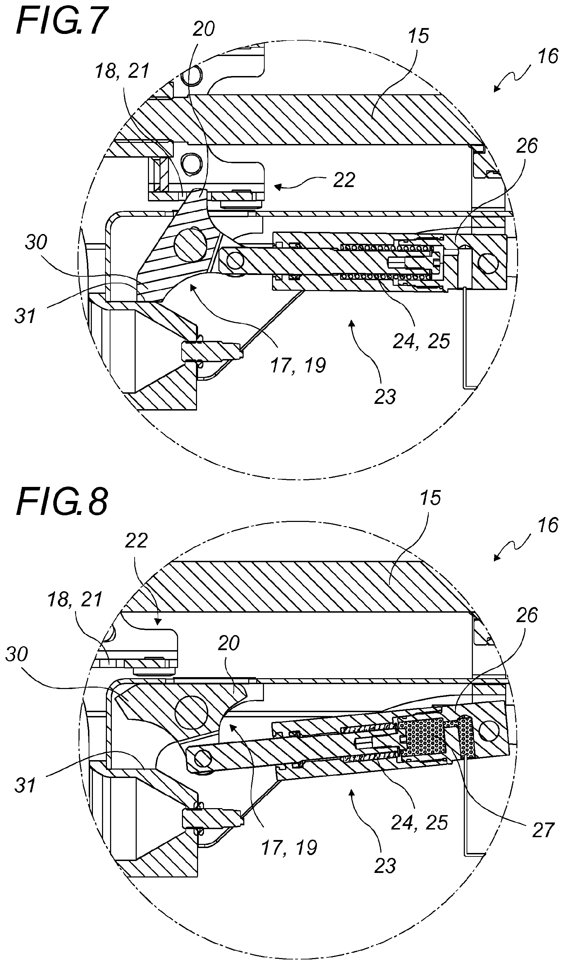

Sur les figures 5 et 7, le dispositif de verrouillage (16) de l'invention est en position de verrouillage, dans laquelle le doigt de verrouillage (20) du cliquet de sécurité (19) est engagé dans l'orifice récepteur (21) prévu dans la pièce de guidage (22) solidaire de la tige mobile (15) du vérin principal (14). Dans cette position, la partie (30) du cliquet de sécurité (19) qui est opposée au doigt de verrouillage (20) est en appui sur une surface réceptrice (31) fixe solidaire du timon d'attelage (1). Cet appui empêche le cliquet de sécurité (19) de pivoter vers l'arrière et interdit par conséquent la sortie de la tige mobile (15) du vérin principal (14) tout en autorisant sa rentrée. Dans cette position, le ressort hélicoïdal (25) est déformé et tend à pousser le doigt de verrouillage (20) en engagement dans l'orifice récepteur (21).

Sur la figure 5, la chambre distale (29) du vérin principal (14) est sous pression, ce qui déplace la tige mobile (15) du vérin principal (14) en rentrée. Ce déplacement fait pivoter le cliquet de sécurité (19) dans le sens des aiguilles d'une montre tel que représenté sur les figures. Le doigt de verrouillage (20) quitte l'orifice récepteur (21) et la partie (30) du cliquet de sécurité (19) opposée au doigt de verrouillage (20) n'est plus en appui sur la surface réceptrice (31). La tige mobile (15) du vérin principal (14) est libre de coulisser.

Lors du déplacement de la tige mobile (15) du vérin principal (14) en rentrée, le ressort hélicoïdal (25) pousse le doigt de verrouillage (20) en direction de la tige mobile (15), aussi dès que l'orifice récepteur (21) se retrouve en face du doigt de verrouillage (20), ledit doigt de verrouillage (20) s'engage automatiquement à verrouillage dans l'orifice récepteur (21).

Sur la figure 6, c'est la chambre proximale (28) du vérin principal (14) qui est sous pression, ce qui déplace la tige mobile (15) du vérin principal (14) en sortie. Puisque la chambre (27) du vérin secondaire (26) est en communication fluidique avec la chambre proximale (28), ledit vérin secondaire (26) déplace également le doigt de verrouillage (20) en position escamotée. Si le doigt de verrouillage (20) était engagé dans l'orifice récepteur (21), il est alors déplacé en dehors de celui-ci.

Dans cette position représentée sur les figures 6 et 8, la tige mobile (15) du vérin principal (14) peut librement coulisser en sortie.

On notera qu'en cas de défaillance hydraulique ou pneumatique, la tige mobile (15) du vérin principal (14) est bloquée en sortie par la mise en place automatique du doigt de verrouillage (20) en position de verrouillage, ce qui constitue un dispositif de sécurité positive pour le dispositif de verrouillage (16) de l'invention.

Selon un mode de réalisation préféré de l'invention, le timon d'attelage (1) est monté pivotant par rapport au véhicule routier (2) qu'il équipe dans un plan horizontal et/ou dans un plan vertical.

Afin de l'immobiliser lorsqu'il ne sert pas à l'attelage d'un autre véhicule, le timon d'attelage (1) comprend un dispositif d'immobilisation (32). Ce dispositif d'immobilisation (32) est prévu pour empêcher tout pivotement du timon d'attelage (1) lorsque la tige mobile (15) dudit timon d'attelage (1) est en position rétractée.

Selon un mode de réalisation préféré de l'invention, le timon d'attelage (1) comprend également un dispositif de centrage (33) prévu pour ramener le timon d'attelage (1) en position centrale dans le plan horizontal lorsqu'il ne sert pas à l'attelage d'un autre véhicule. En effet, le timon d'attelage (1) peut être désaccouplé alors que les deux véhicules routiers (2, 5) ne sont pas dans le même axe, par exemple lorsqu'ils sont dans un virage. Un tel centrage permet également de placer le timon d'attelage (1) dans une position apte à son immobilisation par le dispositif d'immobilisation (32).

Sur les figures, le dispositif de centrage (33) comprend deux ressorts de centrage (34), un de chaque côté du timon d'attelage (1), pour centrer le timon d'attelage (1) lorsqu'il est désaccouplé.

Selon un mode de réalisation préféré de l'invention, le dispositif d'immobilisation (32) comprend un premier élément d'immobilisation (35) fixé au véhicule routier (2) et un second élément d'immobilisation (36) fixé au timon d'attelage (1). Lesdits premier et second éléments d'immobilisation (35 et 36) sont prévus pour s'engager à verrouillage mutuel lorsque la tige mobile (15) du vérin principal (14) est déplacée en position rétractée, le timon d'attelage (1) étant alors immobilisé en position lorsque les premier et second éléments d'immobilisation (35 et 36) sont verrouillés mutuellement. Selon une variante préférée de l'invention, la partie distale (9) du timon d'attelage (1) est en outre pivotée vers le haut par le dispositif d'immobilisation (32) lorsque les premier et second éléments d'immobilisation (35 et 36) sont verrouillés mutuellement.

Selon un mode de réalisation préféré de l'invention, le second élément d'immobilisation (36) est monté pivotant sur le timon d'attelage (1) entre une position de verrouillage dans laquelle il est engagé à verrouillage avec le premier élément d'immobilisation (35), et une position de déverrouillage dans laquelle il n'est pas engagé à verrouillage avec le premier élément d'immobilisation (35). Le premier élément d'immobilisation (35) est préférentiellement conformé de sorte que lorsqu'il est engagé par le second élément d'immobilisation (36), cela exerce une force verticale sur le second élément d'immobilisation (36) dirigée vers le haut, ce qui fait pivoter le timon d'attelage (1) vers le haut par rapport au véhicule routier (2) qu'il équipe. Le premier élément d'immobilisation (35) présentant une partie libre effilée, il exerce également un effet de centrage pour le timon d'attelage (1).

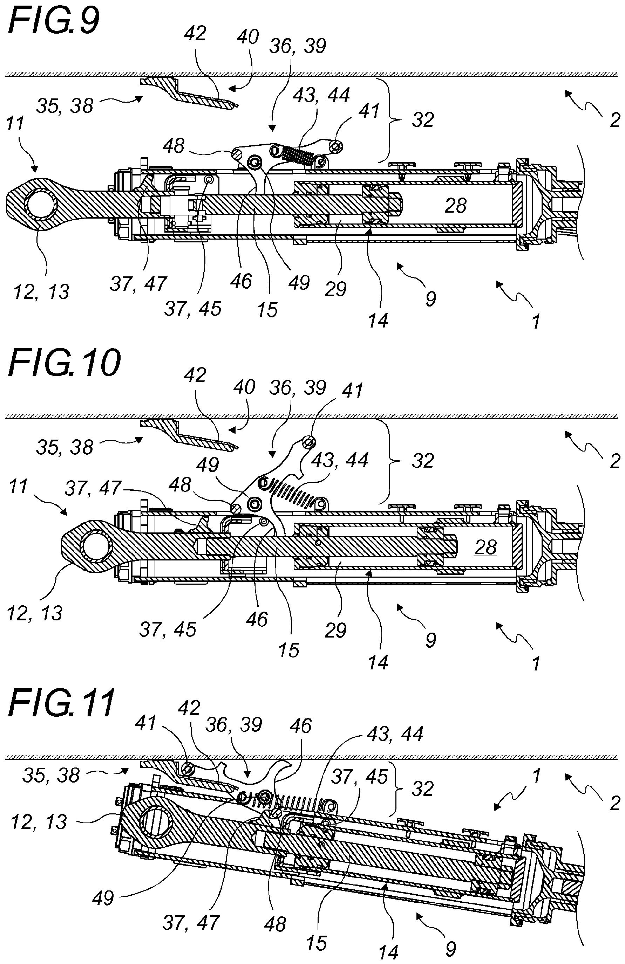

En position de verrouillage du dispositif d'immobilisation (32), le timon d'attelage (1) est donc non seulement maintenu immobile sous la structure du véhicule (2), mais il est également plaqué vers le haut de sorte d'éviter tout risque de collision entre le timon d'attelage (1) et un éventuel obstacle sur la route. Sur la figure 11, le timon d'attelage (1) est ainsi relevé de 8 degrés pour dégager un maximum la garde au sol.

Selon une variante de l'invention non représentée sur les figures, le dispositif d'immobilisation (32) comprend une came ou une tringlerie reliée à la tige mobile (15) du vérin principal (14) et au second élément d'immobilisation (36), ladite came ou tringlerie faisant pivoter le second élément d'immobilisation (36) en position de verrouillage lorsque la tige mobile (15) du vérin est déplacée en position rétractée.

Selon une variante préférée de l'invention représentée sur les figures 9 à 11, le dispositif d'immobilisation (32) comprend au moins une pièce en saillie (37) prévue sur la tige mobile (15) du vérin principal (14) et venant en contact avec le second élément d'immobilisation (36) lorsque ladite tige mobile (15) est déplacée en position rétractée, ladite pièce en saillie (37) faisant pivoter le second élément d'immobilisation (36) en position de verrouillage lorsque la tige mobile (15) du vérin principal (14) est déplacée en position rétractée.

Tels que représentés à titre d'exemple sur les figures 9 à 11, le premier élément d'immobilisation (35) est sous la forme d'une griffe ou d'un crochet (38) prévue sous le véhicule routier (2), tandis que le second élément d'immobilisation (36) est sous la forme d'un verrou ou d'un étrier (39) monté pivotant en partie supérieure du timon d'attelage (1). La griffe ou crochet (38) présente une ouverture réceptrice (40) dirigée vers l'arrière du véhicule routier (2), cette ouverture réceptrice (40) étant prévue pour recevoir une tige horizontale supérieure (41) prévue au niveau de l'extrémité libre du verrou ou de l'étrier (39), la réception de la tige horizontale supérieure (41) dans la griffe ou crochet (38) verrouillant le timon d'attelage (1) en position. L'ouverture réceptrice (40) est préférentiellement prolongée dans sa partie inférieure par une rampe inclinée (42), qui a pour effet de soulever le timon d'attelage (1) vers le haut lorsque la tige horizontale supérieure (41) coulisse en appui sur la face supérieure de ladite rampe inclinée (42) lors du pivotement du verrou ou de l'étrier (39) vers sa position de verrouillage.

Le dispositif d'immobilisation (32) comprend un dispositif de poussée ou de rappel élastique (43) qui contraint le second élément d'immobilisation (36) en position de déverrouillage. Tel que représenté à titre d'exemple sur les figures 9 à 11, ce dispositif de poussée ou de rappel élastique (43) est sous la forme d'un ressort hélicoïdal (44) qui tire le second élément d'immobilisation (36) en arrière, en position désengagée du premier élément d'immobilisation (35).

Selon un mode de réalisation préféré de l'invention, le second élément d'immobilisation (36) est pivoté en position d'immobilisation du timon d'attelage (1) en plusieurs étapes successives représentées sur les figures 9 à 11 lors du déplacement de la tige mobile (15) du vérin principal (14) en position rétractée. Ces étapes, spécifiques au mode de réalisation préféré de l'invention, sont données ici à titre d'exemple afin de mieux comprendre le fonctionnement du dispositif d'immobilisation (32) de l'invention.

Sur la figure 9, la tige mobile (15) est en position partiellement sortie. La chambre du vérin principal (14) représentée à gauche sur les figures est mise sous pression afin de faire reculer la tige mobile (15) vers la droite. Le dispositif de poussée ou de rappel élastique (43) ramène le second élément d'immobilisation (36) en position désengagée du premier élément d'immobilisation (35), par exemple plaqué longitudinalement contre le corps principal du timon d'attelage (1).

Sur la figure 10, la tige mobile (15) est en position partiellement rentrée. Une première pièce en saillie (37, 45) prévue sur la tige mobile (15) vient en appui sur une rampe courbe concave (46) conformée en partie inférieure du second élément d'immobilisation (36). Lors de la rentrée de la tige mobile (15), l'appui de première pièce en saillie (37, 45) sur la rampe courbe concave (46) provoque le pivotement d'environ un quart de tour du second élément d'immobilisation (36). Pendant cette étape, le dispositif de poussée ou de rappel élastique (43) tend à vouloir ramener le second élément d'immobilisation (36) dans la position représentée sur la figure 9.

Une seconde pièce en saillie (37, 47) prévue sur la tige mobile (15) vient alors en appui sur le second élément d'immobilisation (36), par exemple au niveau d'une tige horizontale inférieure (48) lorsque le second élément d'immobilisation (36) est sous la forme d'un verrou ou d'un étrier (39) tel que décrit précédemment. Cet appui de la seconde pièce en saillie (37, 47) sur le second élément d'immobilisation (36) permet de faire pivoter plus encore le second élément d'immobilisation (36) dans la direction de son engagement avec le premier élément d'immobilisation (35) lors de la rentrée de la tige mobile (15).

La tige horizontale supérieure (41) du second élément d'immobilisation (36) vient alors glisser sur la rampe inclinée (42) du premier élément d'immobilisation (35), ce qui soulève progressivement le timon d'attelage (1) au fur et à mesure de la rentrée de la tige mobile (15).

On notera que la cinématique des mouvements du second élément d'immobilisation (36) selon l'invention est obtenue notamment grâce au fait que la tige horizontale inférieure (41) et la tige horizontale inférieure (48) sont excentrées par rapport à l'axe de pivotement (49) du second élément d'immobilisation (36) et de préférence sensiblement opposée par rapport audit axe de pivotement (49).

Sur la figure 11, la tige mobile (15) est en position entièrement rentrée. La seconde pièce en saillie (37, 47) est toujours en appui sur le second élément d'immobilisation (36). Ce dernier est basculé d'environ un demi-tour par rapport à sa position représentée sur la figure 9, la rampe courbe concave (46) se trouvant maintenant vers le haut. Le second élément d'immobilisation (36) est alors engagé avec le premier élément d'immobilisation (35) en position d'immobilisation du timon d'attelage (1). Le dispositif de poussée ou de rappel élastique (43) est fortement déformé et tend à vouloir ramener le second élément d'immobilisation (36) dans la position représentée sur la figure 9.

La libération du timon d'attelage (1) se fait par les opérations inverses. Lors de la sortie de la tige mobile (15) du vérin principal (14), l'au moins une pièce en saillie (37) n'est plus en appui sur le second élément d'immobilisation (36) et celui-ci ramené en arrière le long du corps principal du timon d'attelage (1) par le dispositif de poussée ou de rappel élastique (43) (voir figure 9).

## Revendications

1. Véhicule routier (2) équipé d'un timon d'attelage (1) pour son attelage avec un second véhicule routier (5), le timon d'attelage (1) comprenant les moyens suivants :
• un vérin principal (14) disposé longitudinalement dans le timon d'attelage (1) et comportant une tige mobile (15) entre une position rétractée, une position sortie et une position intermédiaire comprise entre la position rétractée et la position sortie ;
• une pièce d'attelage (12) prévue à l'extrémité libre de la tige mobile (15) du vérin principal (14), ladite pièce d'attelage (12) étant apte à atteler ledit véhicule (2) au second véhicule routier (5) par son verrouillage avec une pièce d'attelage complémentaire **caractérisé en ce que** le timon d'attelage (1) comprend le moyen suivant:
• un dispositif de verrouillage (16) qui est actionné automatiquement en verrouillage en cas de défaillance dudit vérin principal (14), le dispositif de verrouillage (16) empêchant la sortie de la tige mobile (15) du vérin principal (14) lorsqu'il est actionné en verrouillage.

2. Véhicule routier (2) selon la revendication 1, **caractérisé en ce que** le dispositif de verrouillage (16) comprend un ensemble de verrouillage (17) solidaire du timon d'attelage (1) et prévu pour s'engager à verrouillage mutuel avec un ensemble de verrouillage complémentaire (18) solidaire de la tige mobile (15) du vérin principal (14) lorsque la tige mobile (15) est en position intermédiaire afin d'empêcher le déplacement de ladite tige mobile (15) du vérin principal (14) en position sortie.

3. Véhicule routier (2) selon la revendication précédente, **caractérisé en ce que** l'ensemble de verrouillage (17) comprend un cliquet de sécurité (19) monté mobile sur le timon d'attelage (1) entre une position de verrouillage empêchant le déplacement de la tige mobile (15) du vérin principal (14) lorsque ladite tige mobile (15) est en position intermédiaire et une position escamotée dans laquelle il est passif et autorise le déplacement la tige mobile (15).

4. Véhicule routier (2) selon la revendication précédente, **caractérisé en ce que** l'ensemble de verrouillage (17) comprend un mécanisme de maintien (23) qui contraint le cliquet de sécurité (19) en position de verrouillage lorsque la tige mobile (15) du vérin principal (14) est immobile ou se déplace en direction de la position sortie, et qui autorise le déplacement automatique du cliquet de sécurité (19) en position escamotée lorsque la tige mobile (15) du vérin principal (14) se déplace en direction de la position rétractée.

5. Véhicule routier (2) selon la revendication précédente, **caractérisé en ce que** le mécanisme de maintien (23) comporte un dispositif de rappel ou de poussée élastique (24) qui contraint le cliquet de sécurité (19) en position de verrouillage.

6. Véhicule routier (2) selon la revendication 4 ou 5, **caractérisé en ce que** le mécanisme de maintien (23) comporte un vérin secondaire (26) qui déplace le cliquet de sécurité (19) en position escamotée lorsqu'il est actionné, une chambre (27) dudit vérin secondaire (26) étant en communication fluidique avec une chambre (28) du vérin principal (14) ou la commande électrique du vérin secondaire (26) étant asservie à celle du vérin principal (14) de sorte que lorsque le vérin principal (14) est actionné pour faire sortir la tige mobile (15), le vérin secondaire (26) associé au cliquet de sécurité (19) est aussi actionné.

7. Véhicule routier (2) selon l'une quelconques des revendications 3 à 6, **caractérisé en ce que** le cliquet de sécurité (19) comporte un doigt de verrouillage (20), et **en ce que** l'ensemble de verrouillage complémentaire (18) solidaire de la tige mobile (15) du vérin principal (14) comprend un orifice récepteur (21) prévu pour recevoir le doigt de verrouillage (20) en position de verrouillage.

8. Véhicule routier (2) selon l'une quelconques des revendications précédentes, **caractérisé en ce que** le timon d'attelage (1) est monté pivotant par rapport au véhicule routier (2) qu'il équipe dans un plan horizontal et/ou dans un plan vertical, et **en ce qu'**il comprend en outre un dispositif d'immobilisation (32) prévu pour empêcher tout pivotement du timon d'attelage (1) lorsque la tige mobile (15) dudit timon d'attelage (1) est en position rétractée.

9. Véhicule routier (2) selon la revendication précédente, **caractérisé en ce que** le dispositif d'immobilisation (32) comprend :
• un premier élément d'immobilisation (35) fixé au véhicule routier (2) ;
• un second élément d'immobilisation (36) fixé au timon d'attelage (1) et prévu pour s'engager à verrouillage mutuel avec ledit premier élément d'immobilisation (35) lorsque la tige mobile (15) du vérin principal (14) est déplacée en position rétractée ;
• ledit timon d'attelage (1) étant immobilisé en position lorsque les premier et second éléments d'immobilisation (35 et 36) sont verrouillés mutuellement.

10. Véhicule routier (2) selon la revendication précédente, **caractérisé en ce que** le second élément d'immobilisation (36) est monté pivotant sur le timon d'attelage (1) entre une position de verrouillage dans laquelle il est engagé à verrouillage avec le premier élément d'immobilisation (35), et une position de déverrouillage dans laquelle il n'est pas engagé à verrouillage avec le premier élément d'immobilisation (35), et **en ce que** le dispositif d'immobilisation (32) comprend :
• une came reliée à la tige mobile (15) du vérin principal (14) et au second élément d'immobilisation (36) ; ou
• une pièce en saillie (37) prévue sur la tige mobile (15) du vérin principal (14) et venant en contact avec le second élément d'immobilisation (36) lorsque ladite tige mobile (15) est déplacée en position rétractée ;
ladite came ou pièce en saillie (37) faisant pivoter le second élément d'immobilisation (36) en position de verrouillage lorsque la tige mobile (15) du vérin est déplacée en position rétractée.

11. Véhicule routier (2) selon la revendication 9 ou 10, **caractérisé en ce que** le premier élément d'immobilisation (35) est prévu sous le véhicule routier (2) et **en ce que** le second élément d'immobilisation (36) est prévu en partie supérieure du timon d'attelage (1).

12. Véhicule routier (2) selon l'une quelconque des revendications 9 à 11, **caractérisé en ce que** les premier et second éléments d'immobilisation (35 et 36) sont pour l'un une griffe ou un crochet (38) et pour l'autre un verrou ou un étrier (39), lesdits premier et second éléments d'immobilisation (35 et 36) étant prévus pour être engagés à verrouillage mutuel lorsque la tige mobile (15) dudit timon d'attelage (1) est en position rétractée.

13. Véhicule routier (2) selon l'une quelconque des revendications 10 à 12, **caractérisé en ce que** le dispositif d'immobilisation (32) comprend un dispositif de poussée ou de rappel élastique (43) qui contraint le second élément d'immobilisation (36) en position de déverrouillage.

14. Véhicule routier (2) selon l'une quelconque des revendications précédente, **caractérisé en ce qu'**il comporte :
• un timon d'attelage (1) à une extrémité avant ou arrière du véhicule routier (2), et comportant une pièce d'attelage (12) ;
• une chape d'attelage (3) prévue l'extrémité opposée du véhicule routier (2), et comportant une pièce d'attelage complémentaire ;
la pièce d'attelage (12) du véhicule routier (2) étant apte à se verrouiller mutuellement avec une pièce d'attelage complémentaire d'un autre véhicule routier (5), et ladite pièce d'attelage complémentaire du véhicule routier (2) étant apte à se verrouiller mutuellement avec la pièce d'attelage (12) d'un autre véhicule routier (5).

15. Véhicule routier (2) selon la revendication précédente, **caractérisé en ce qu'**il comporte un timon d'attelage (1) à l'avant et une chape d'attelage (3) à l'arrière.

## Patentansprüche

1. Straßenfahrzeug (2), ausgerüstet mit einer Anhängerdeichsel (1) zum Anhängen eines zweiten Straßenfahrzeugs (5), dabei umfasst die Anhängerdeichsel (1) die folgenden Bestandteile:
• ein Hauptzylinder (14), untergebracht in Längsrichtung in der Anhängerdeichsel (1), mit einer Stange (15), diese ist beweglich zwischen einer eingeklappten Position, einer ausgeklappten Position und einer Zwischenposition, die zwischen der eingeklappten Position und der ausgeklappten Position liegt;
• eine Anhängerkupplung (12) vorgesehen am freien Ende der mobilen Stange (15) des Hauptzylinders (14), mit dieser Anhängerkupplung (12) kann das erwähnte Fahrzeug (2) über eine Verriegelung mit einer komplementären Anhängerkupplung an ein zweites Straßenfahrzeug (5) angekuppelt werden,
**dadurch gekennzeichnet, dass** die Anhängerdeichsel (1) die folgenden Bestandteile umfasst:
• eine Verriegelungsvorrichtung (16), die beim Ausfall des erwähnten Hauptzylinders (14) automatisch verriegelt wird, dabei verhindert die Verriegelungsvorrichtung (16), dass die mobile Stange (15) bei der Verriegelung aus dem Hauptzylinder (14) rutscht.

2. Straßenfahrzeug (2) nach Anspruch 1, **dadurch gekennzeichnet, dass** die Verriegelungsvorrichtung (16) eine Verriegelungseinheit (17) enthält, die fest mit der Anhängerdeichsel (1) verbunden ist und dazu vorgesehen ist, in wechselseitiger Verriegelung in eine komplementäre Verriegelungseinheit (18) zu greifen, die fest mit der mobilen Stange (15) des Hauptzylinders (14) verbunden ist, wenn sich die mobile Stange (15) in einer Zwischenposition befindet, um zu verhindern, dass sich die erwähnte mobile Stange (15) des Hauptzylinders (14) in die ausgeklappte Position verschiebt.

3. Straßenfahrzeug (2) nach dem vorangehenden Anspruch, **dadurch gekennzeichnet, dass** die Verriegelungseinheit (17) eine Sicherungsklinke (19) enthält, mobil montiert auf der Anhängerdeichsel (1) zwischen einer Verriegelungsposition, die verhindert, dass sich die mobile Stange (15) des Hauptzylinder (14) verschiebt, wenn sich diese mobile Stange (15) in der Zwischenposition befindet und einer ausgeklappten Position, in der sie das Verschieben der mobilen Stange (15) zulässt.

4. Straßenfahrzeug (2) nach dem vorangehenden Anspruch, **dadurch gekennzeichnet, dass** die Verriegelungseinheit (17) einen Haltemechanismus (23) umfasst, der die Sicherungsklinke (19) in der Verriegelungsposition festhält, wenn die mobile Stange (15) des Hauptzylinders (14) unbeweglich ist oder sich in Richtung der ausgeklappten Position verschiebt, und die automatische Verschiebung der Sicherungsklinke (19) in die ausgeklappte Position zulässt, wenn die mobile Stange (15) des Hauptzylinders (14) sich in Richtung der eingeklappten Position verschiebt.

5. Straßenfahrzeug (2) nach dem vorangehenden Anspruch, **dadurch gekennzeichnet, dass** der Haltemechanismus (23) eine Rückstell- oder elastische Andrückvorrichtung (24) enthält, die die Sicherungsklinke (19) in die Verriegelungsposition zwingt.

6. Straßenfahrzeug (2) nach Anspruch 4 oder 5, **dadurch gekennzeichnet, dass** der Haltemechanismus (23) einen Sekundärzylinder (26) enthält, der die Sicherungsklinke (19) in die ausgeklappte Position schiebt, wenn er betätigt wird, dabei steht eine Kammer (27) dieses Sekundärzylinders (26) in Flüssigkeitsverbindung mit einer Kammer (28) des Hauptzylinders (14) oder die elektrische Steuerung des Sekundärzylinders (26) hängt von der des Hauptzylinders (14) ab, so dass, wenn der Hauptzylinder (14) betätigt wird, um die mobile Stange (15) auszufahren, der Sekundärzylinder (26), der mit der Sicherungsklinke (19) verbunden ist, ebenfalls betätigt wird.

7. Straßenfahrzeug (2) nach einem beliebigen der Ansprüche 3 bis 6, **dadurch gekennzeichnet, dass** die Sicherungsklinke (19) einen Verriegelungsstift (20) enthält, und dadurch, dass die komplementäre Verriegelungseinheit (18), die mit der mobilen Stange (15) des Hauptzylinders (14) fest verbunden ist, eine Aufnahmeöffnung (21) enthält, die zur Aufnahme des Verriegelungsstiftes (20) in der Verriegelungsposition vorgesehen ist.

8. Straßenfahrzeug (2) nach einem beliebigen der vorangehenden Ansprüche, **dadurch gekennzeichnet, dass** die Anhängerdeichsel (1), bezogen auf das Straßenfahrzeug (2), das damit ausgerüstet ist, in horizontaler Ebene und/ oder in vertikaler Ebene schwenkbar montiert ist, und dass sie außerdem eine Immobilisierungsvorrichtung (32) enthält, vorgesehen um jedes Kippen der Anhängerdeichsel (1) zu verhindern, wenn die mobile Stange (15) dieser Anhängerdeichsel (1) sich in der eingeklappten Position befindet.

9. Straßenfahrzeug (2) nach dem vorangehenden Anspruch; **dadurch gekennzeichnet, dass** die Immobilisierungsvorrichtung (32) umfasst:
• ein erstes Immobilisierungselement (35), befestigt am Straßenfahrzeug (2);
• ein zweites Immobilisierungselement (36) befestigt an der Anhängerdeichsel (1) und dazu vorgesehen in wechselseitiger Verriegelung in das erste Immobilisierungselement (35) zu greifen, wenn die mobile Stange (15) des Hauptzylinders (14) in die eingeklappte Position verschoben wird;
• diese Anhängerdeichsel (1) wird in seiner Position immobilisiert, wenn das erste und zweite Immobilisierungselement (35 und 36) miteinander verriegelt werden.

10. Straßenfahrzeug (2) nach dem vorangehenden Anspruch, **dadurch gekennzeichnet, dass** das zweite Immobilisierungselement (36) schwenkbar auf der Anhängerdeichsel (1) montiert ist, zwischen einer Verriegelungsposition, in der es mit dem ersten Immobilisierungselement (35) verriegelt ist und einer Entriegelungsposition, in der es nicht mit dem ersten Immobilisierungselement (35) verriegelt ist und dadurch, dass die Immobilisierungsvorrichtung (32) umfasst
• eine Nocke, verbunden mit der mobilen Stange (15) des Hauptzylinders (14) und mit dem zweiten Immobilisierungselement (36); oder
• ein herausragendes Teil (37), vorgesehen auf der mobilen Stange (15) des Hauptzylinders (14), das in Kontakt mit dem zweiten Immobilisierungselement (36) kommt, wenn diese mobile Stange (15) in die eingeklappte Position verschoben wird.
diese Nocke oder dieses herausragende Teil (37) veranlassen, dass das zweite Immobilisierungselement (36) in die Verriegelungsposition kippt, wenn die mobile Stange (15) des Zylinders in die eingeklappte Position verschoben wird.

11. Straßenfahrzeug (2) nach Anspruch 9 oder 10, **dadurch gekennzeichnet, dass** das erste Immobilisierungselement (35) unter dem Straßenfahrzeug (2) vorgesehen ist und das zweite Immobilisierungselement (36) im oberen Teil der Anhängerdeichsel (1) vorgesehen ist.

12. Straßenfahrzeug (2) nach einem beliebigen der Ansprüche 9 bis 11, **dadurch gekennzeichnet, dass** das erste und zweite Immobilisierungselement (35 und 36) einerseits eine Klaue oder ein Haken (38) ist und andererseits ein Riegel oder ein Bügel (39), die erwähnten ersten und zweiten Immobilisierungselemente (35 und 36) sind vorgesehen wechselseitig verriegelt zu werden, wenn die mobile Stange (15) dieser Anhängerdeichsel (1) sich in der eingeklappten Position befindet.

13. Straßenfahrzeug (2) nach einem beliebigen der Ansprüche 10 bis 12, **dadurch gekennzeichnet, dass** die Immobilisierungsvorrichtung (32) eine Rückstell- oder elastische Andrückvorrichtung (43) enthält, die das zweite Immobilisierungselement (36) in die Entriegelungsposition zwingt.

14. Straßenfahrzeug (2) nach irgendeinem der vorangehenden Ansprüche, **dadurch gekennzeichnet, dass** es enthält:
• eine Anhängerdeichsel (1) an einem vorderen oder hinteren Ende des Straßenfahrzeugs (2), die eine Anhängerkupplung (12) enthält;
• eine Bolzenkupplung (3) vorgesehen am entgegengesetzten Ende des Straßenfahrzeugs (2), die ein komplementäres Kupplungsteil enthält;
die Anhängerkupplung (12) des Straßenfahrzeugs (2) ist dabei in der Lage, wechselseitig mit einer komplementären Anhängerkupplung eines anderen Straßenfahrzeugs (5) verriegelt zu werden und diese komplementäre Anhängerkupplung des Straßenfahrzeugs (2) ist in der Lage, wechselseitig mit der Anhängerkupplung (12) eines anderen Straßenfahrzeugs (5) verriegelt zu werden.

15. Straßenfahrzeug (2) nach dem vorangehenden Anspruch, **dadurch gekennzeichnet, dass** es außerdem eine Anhängerdeichsel (1) vorne und eine Bolzenkupplung (3) hinten umfasst.

## Claims

1. A road vehicle (2) equipped with a drawbar (1) for coupling thereof with a second road vehicle (5), the drawbar (1) comprising the following means:
• a main cylinder (14) arranged longitudinally in the drawbar (1) and comprising a rod (15) mobile between a retracted position, an extended position and an intermediate position between the retracted position and the extended position;
• a coupling part (12) provided at the free end of the mobile rod (15) of the main cylinder (14), said coupling part (12) being able to couple said vehicle (2) to the second road vehicle (5) by latching thereof with a complementary coupling part, **characterized in that** the drawbar (1) comprises the following means:
• a latching device (16) that is actuated automatically in latching in case of failure of said main cylinder (14), the latching device (16) preventing the extension of the mobile rod (15) of the main cylinder (14) when it is actuated in latching.

2. The road vehicle (2) according to claim 1, **characterized in that** the latching device (16) comprises a latching assembly (17) secured to the drawbar (1) and intended to engage in mutual latching with a complementary latching assembly (18) secured to the mobile rod (15) of the main cylinder (14) when the mobile rod (15) is in the intermediate position in order to prevent the movement of said mobile rod (15) of the main cylinder (14) in extended position.

3. The road vehicle (2) according to the preceding claim, **characterized in that** the latching assembly (17) comprises a safety ratchet (19) mounted on the drawbar (1) mobile between a latching position preventing displacement of the mobile rod (15) of the main cylinder (14) when said mobile rod (15) is in the intermediate position and a stowed-away position in which it is passive and allows displacement of the mobile rod (15).

4. The road vehicle (2) according to the preceding claim, **characterized in that** the latching assembly (17) comprises a holding mechanism (23) which constrains the safety ratchet (19) in a latching position when the mobile rod (15) of the main cylinder (14) is immobile or moves in the direction of the extended position, and which allows the automatic movement of the safety ratchet (19) in the stowed-away position when the mobile rod (15) of the main cylinder (14) moves in direction of the retracted position.

5. The road vehicle (2) according to the preceding claim, **characterized in that** the holding mechanism (23) comprises an elastic return or pushing device (24) which constrains the safety ratchet (19) in the latching position.

6. The road vehicle (2) according to claim 4 or 5, **characterized in that** the holding mechanism (23) comprises a secondary cylinder (26) which moves the safety ratchet (19) into the stowed-away position when it is actuated, a chamber (27) of said secondary cylinder (26) being in fluid communication with a chamber (28) of the main cylinder (14) or the electrical control of the secondary cylinder (26) is subject to that of the main cylinder (14) such that when the main cylinder (14) is actuated for extending the mobile rod (15), the secondary cylinder (26) associated with the security ratchet (19) is also actuated.

7. The road vehicle (2) according to any one of claims 3 to 6, **characterized in that** the safety ratchet (19) comprises a latching finger (20), and **in that** the complementary latching assembly (18) secured to the mobile rod (15) of the main cylinder (14) comprises a receiving opening (21) intended to receive the latching finger (20) in latching position.

8. The road vehicle (2) according to any one of the preceding claims, **characterized in that** the drawbar (1) is mounted pivoting relative to the road vehicle (2) that it equips in a horizontal plane and/or in a vertical plane, and **in that** it further comprises an immobilization device (32) intended to prevent any pivoting of the drawbar (1) when the mobile rod (15) of said drawbar (1) is in the retracted position.

9. The road vehicle (2) according to the preceding claim, **characterized in that** the immobilization device (32) comprises:
• a first immobilization element (35) fixed to the road vehicle (2);
• a second immobilization element (36) fixed to the drawbar (1) and intended to engage for mutual latching with said first immobilization element (35) when the mobile rod (15) of the main cylinder (14) is moved into the retracted position;
said drawbar (1) being immobilized in position when the first and second immobilization elements (35 and 36) are mutually latched.

10. The road vehicle (2) according to the preceding claim, **characterized in that** the second immobilization element (36) is mounted pivoting on the drawbar (1) between a latching position in which it is engaged for latching with the first immobilization element (35), and a second unlatched position in which it is not engaged for latching with the first immobilization element (35), and **in that** the immobilization device (32) comprises:
• a cam connected to the mobile rod (15) of the main cylinder (14) and a second immobilization element (36); or
• a projecting part (37) provided on the mobile rod (15) of the main cylinder (14) and coming into contact with the second immobilization element (36) when said mobile rod (15) is displaced into the retracted position;
said cam or projecting part (37) making the second immobilization element (36) pivot into the latching position when the mobile rod (15) of the cylinder is displaced into retracted position.

11. The road vehicle (2) according to claim 9 or 10, **characterized in that** the first immobilization element (35) is provided under the road vehicle (2) and **in that** the second immobilization element (36) is provided in the upper part of the drawbar (1).

12. The road vehicle (2) according to any one of claims 9 to 11, **characterized in that** the first and second immobilization elements (35 and 36) are for the one a claw or hook (38) and for the other a hasp or hanger (39), said first and second immobilization elements (35 and 36) being intended to be engaged in mutual latching when the mobile rod (15) of said drawbar (1) is in retracted position.

13. The road vehicle (2) according to any one of claims 10 to 12, **characterized in that** the immobilization device (32) comprises an elastic pushing or return device (43) which constrains the second immobilization element (36) in unlatching position.

14. The road vehicle (2) according to any one of the preceding claims, **characterized in that** it comprises:
• a drawbar (1) at the front or rear end of the road vehicle (2) and comprising a coupling part (12);
• a coupling yoke (3) provided at the other end of the road vehicle (2) and comprising a complementary coupling part;
the coupling part (12) of the road vehicle (2) being able to mutually latch with a complementary coupling part of another road vehicle (5), and said complementary coupling part of the road vehicle (2) being able to mutually latch with the coupling part (12) of another road vehicle (5).

15. The road vehicle (2) according to the preceding claim, **characterized in that** it comprises a drawbar (1) at the front and a coupling yoke (3) at the rear.
